# EUROPÄISCHE PATENTANMELDUNG

(11) **EP 4 167 521 A1**
(43) Veröffentlichungstag der Anmeldung: **19.04.2023**
(21) Anmeldenummer: 22171645.9
(22) Anmeldetag: 04.05.2022
(51) Int. Cl.: H04L 9/40, G06F 21/57

(54) **VERFAHREN ZUM TESTEN EINES GERÄTS UND TESTEINRICHTUNG**

(30) Priorität: 18.10.2021 DE 102021211756
(71) Anmelder: Siemens Aktiengesellschaft, 80333 München (DE)
(72) Erfinder: Fischer, Christoph, 86551 Untermauerbach (DE); Haklaj, Merita, 86551 Untermauerbach/Aichach (DE); Lukas, Klaus, 81739 München (DE); Riedmüller, Reinhard, 81735 München (DE)
(74) Vertreter: Siemens Patent Attorneys

(57) **Zusammenfassung**

Bei dem Verfahren zum Prüfen einer IT-Sicherheit eines Geräts (DUT) wird das Gerät (DUT) zunächst mindestens einem ersten IT-Sicherheitstest (STES) unterzogen und es wird mindestens ein Datum mindestens eines Testresultats (TRES) des mindestens einen ersten IT-Sicherheitstests (STES) herangezogen, wobei das Datum eine weitere bislang unberücksichtigte Geräteeigenschaft kennzeichnet, und es wird eine Zuordnungsvorschrift herangezogen, die dem mindestens einen Datum (DAT) ein Testverfahren für mindestens einen weiteren IT-Sicherheitstest des Geräts (DUT) zuordnet, welcher nachfolgend die mindestens eine weitere Geräteeigenschaft (GSPEZ, USPEZ) des Geräts (DUT) einem Test unterzieht (DTES).

Die vom Computerprogrammprodukt hervorgebrachte relevante Information spezifischer Testresultate oder Protokolle, herangezogen zur Ausprägung weiterer Tests (DTES) eines solchen Verfahrens, bildet und erweitert die Zuordnungsdatenbank und/oder die Zuordnungsvorschrift .

Die Testeinrichtung zum Prüfen einer IT-Sicherheit eines Geräts umfasst mindestens ein solches Computerprogrammprodukt.

## Beschreibung

Die Erfindung betrifft ein Verfahren zum Testen eines Geräts sowie eine Testeinrichtung.

Das Ziel von Sicherheitstests im Bereich der IT-Sicherheit, d. h. insbesondere in der Informationssicherheit und/oder der Funktionssicherheit, wird normalerweise durch einen Prüfer manuell festgelegt. D. h., der Prüfer nimmt eine Auswahl von spezifischen Testwerkzeugen, Testfällen und deren Parametrisierung vor und stellt die Testwerkzeuge und Testfälle zu einer ganzheitlichen Teststrategie zusammen. Insbesondere im Bereich von Geräten in Form von Automatisierungsgeräten der Industrie, etwa von Feldgeräten in Automatisierungsnetzwerken, hängen solche Sicherheitstest stark von jeweiligen Gerätetyp und den Umgebungsanforderungen an einen solchen Gerätetyp ab. Prüfer kennen normalerweise das zu untersuchende Gerät und legen Testumgebungen für diese Geräte spezifisch für diese Geräte fest, insbesondere mit einer protokollspezifischen Auswahl von Testfällen.

Häufig sind Prüfern die Geräte sowie deren Einsatzbereiche und demzufolge die Umgebungsanforderungen der Geräteumgebung nicht bekannt oder die Geräte müssen erst durch ein Inventoring-Verfahren aufwendig gefunden und klassifiziert werden.

Bislang sind vor allem Teststrategien bekannt, bei denen die Anforderungen vom Prüfer durch geeignete manuelle Tool-Auswahl sowie der Parametrierungen der Testfälle ausgewählt werden.

Es ist daher Aufgabe der Erfindung, ein verbessertes Verfahren zum Testen eines Geräts anzugeben, welches insbesondere zuverlässiger und/oder unaufwändiger ausführbar ist. Ferner ist es Aufgabe der Erfindung, eine Testeinrichtung anzugeben, mittels welcher das vorgenannte verbesserte Verfahren ausführbar ist.

Diese Aufgabe der Erfindung wird mit einem Verfahren mit den in Anspruch 1 angegebenen Merkmalen, mit einem Computerprogrammprodukt mit den in Anspruch 14 angegebenen Merkmalen sowie mit einer Testeinrichtung mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Prüfen einer IT-Sicherheit eines Geräts wird das Gerät zunächst mindestens einem ersten IT-Sicherheitstest unterzogen und es wird bei dem Verfahren mindestens ein Datum mindestens eines Testresultats des mindestens einen ersten IT-Sicherheitstests herangezogen, wobei das Datum eine weitere bislang beim erfindungsgemäßen Verfahren zum Prüfen unberücksichtigte Geräteeigenschaft kennzeichnet, und es wird bei dem Verfahren eine Zuordnungsvorschrift herangezogen, die dem mindestens einen Datum ein Testverfahren für mindestens einen weiteren IT-Sicherheitstest des Geräts zuordnet, welcher nachfolgend die mindestens eine weitere Geräteeigenschaft des Geräts einem Test unterzieht.

Mittels des erfindungsgemäßen Verfahrens kann eine dynamische Generierung von Tests zum Prüfen der IT-Sicherheit des Geräts effizient erfolgen. Mittels des erfindungsgemäßen Verfahrens ist es möglich, Daten aus Testresultaten heranzuziehen, um automatisiert ein Testverfahren, d. h. eine Teststrategie, zu entwickeln. Vorteilhaft werden bei dem erfindungsgemäßen Verfahren solche Daten herangezogen, welche spezifisch für bestimmte Geräteeigenschaften des technischen Geräts sind, sodass solche Testverfahren erhalten werden können, welche mit den Geräteeigenschaften einhergehende Anwendungsfälle des technischen Geräts abdecken.

Vorzugsweise handelt es sich bei der Geräteeigenschaft um eine technische Funktion des technischen Geräts, d. h. die Geräteeigenschaft erschöpft sich nicht allein in der Vorhaltung des Datums. Das mindestens eine Datum im Sinne der vorliegenden Erfindung vorzuhalten allein ist also geeigneterweise nicht die Geräteeigenschaft.

Idealerweise ist das Verfahren ein computer-implementiertes Verfahren, d. h. die Schritte dieses Verfahrens werden mittels eines Computers durchgeführt.

Zweckmäßig umfasst das mindestens eine Datum zumindest ein Konfigurationsdatum und/oder ein Programmbibliotheksdatum oder mindestens einen Funktionsparameter für die technische Funktion. Das Konfigurationsdatum kann insbesondere ein Teil der Konfiguration des technischen Geräts für eine technische Funktion des Geräts sein oder eine Information, dass eine Konfiguration des technischen Geräts für diese technische Funktion vorliegt.

Die Zuordnungsvorschrift kann explizit in der Art einer mehrstufigen Zuordnungsvorschrift vorliegen: So kann die Zuordnungsvorschrift zunächst aus dem Datum, welches eine Geräteeigenschaft des technischen Geräts kennzeichnet, die Geräteeigenschaft ermitteln und nachfolgend aus der Geräteeigenschaft mittels eines darauffolgenden Schritts ein Testverfahren, insbesondere Testfälle und/oder Testwerkzeuge, ermitteln.

Vorteilhaft können bei dem erfindungsgemäßen Verfahren zudem zwei oder mehrere Daten, welche mindestens eine Geräteeigenschaft kennzeichnen, herangezogen werden. So können Daten in Kombination miteinander bestimmte Testfälle und Testwerkzeuge bedingen. So können Konfigurationsdaten für mehrere Gerätefunktionen vorliegen, wobei etwa zugleich vorhandene Firewalls der Geräte oder einer Umgebung der Geräte bestimmte Gerätefunktionen verhindern. In diesem Fall müssen etwa keine Testfälle oder Testwerkzeuge für die verhinderten Gerätefunktionen vorgesehen werden. Auf diese Weise ermöglichen bei dem erfindungsgemäßen Verfahren mehrere Daten in Kombination miteinander eine ressourceneffiziente Auswahl von Testverfahren.

Bei dem Verfahren gemäß der Erfindung umfasst das mindestens eine Datum zweckmäßig mindestens eine Protokollinformation, kennzeichnend eine Befähigung des Geräts zur Ausführung einer Funktion, insbesondere einer Datenverarbeitung, mittels eines Protokolls, auf das sich die Protokollinformation bezieht. Bei dem Verfahren gemäß der Erfindung umfasst die mindestens eine Geräteeigenschaft dabei zweckmäßig mindestens eine Befähigung des Geräts zur Datenverarbeitung mittels des Protokolls oder einer Datenübertragung mittels des Protokolls.

Geeigneterweise ist bei dem erfindungsgemäßen Verfahren das mindestens eine Protokoll der Protokollinformation ein Kommunikationsprotokoll. In einer bevorzugten Weiterbildung des erfindungsgemäßen Verfahrens ist oder umfasst die Befähigung des Geräts zur Datenverarbeitung eine Befähigung des Geräts zur Kommunikation.

Bevorzugt ist bei dem Verfahren die mindestens eine Geräteeigenschaft eine Ausbildung des Geräts zur Erfüllung einer Umgebungsanforderung.

In einer bevorzugten Weiterbildung des erfindungsgemäßen Verfahrens wird das Verfahren wiederholt, wobei der mindestens eine weitere IT-Sicherheitstest an die Stelle des mindestens einen ersten IT-Sicherheitstests tritt. Auf diese Weise wird das erfindungsgemäße Verfahren immer weiter und immer gerätespezifischer fortgesetzt.

Geeigneterweise wird bei dem erfindungsgemäßen Verfahren ein Scoring abhängig von einer Häufigkeit und/oder einer Kritikalität von Testresultaten der IT-Sicherheitstests der jeweiligen Geräteeigenschaft durchgeführt.

Vorzugsweise ist bei dem Verfahren gemäß der Erfindung die Zuordnungsvorschrift mittels einer Zuordnungsdatenbank gebildet, bei welcher einer Mehrzahl von Daten jeweils ein oder mehrere Testverfahren zugeordnet sind. Die Zuordnungsdatenbank kann in Form einer Zuordnungsmatrix gespeichert sein, indem ein oder mehrere Daten zu jeweils einem oder mehreren Testwerkzeugen und/oder Testfällen zugeordnet sind.

Bei dem Verfahren gemäß einer vorteilhaften Weiterbildung der Erfindung ist die Zuordnungsvorschrift mittels eines neuralen Netzes gebildet. In dieser Weiterbildung der Erfindung liegt die Zuordnungsvorschrift folglich nicht explizit in Form eines knapp angebbaren Algorithmus, sondern vielmehr implizit in der Art eines, zweckmäßig trainierten, neuronalen Netzes vor. Dabei können insbesondere bestimmte Daten, welche eine Geräteeigenschaft kennzeichnen, einzeln oder in Kombination miteinander bestimmte Testfälle und/oder Testwerkzeuge indizieren. Eine solche Zuordnung von Testfällen und/oder Testwerkzeugen zu einzelnen oder mehreren Daten aus Testresultaten können etwa durch ein entsprechend trainiertes neuronales Netz erhalten werden, wobei das neuronale Netz mittels zuvor generierter Trainingsdaten, welche Daten aus Testresultaten und von einem oder mehreren menschlichen Prüfingenieuren daraufhin empfohlene Testverfahren umfassen, trainiert ist. D. h., das neuronale Netz ist mittels Trainings dazu ausgebildet, Testresultate oder Daten aus Testresultaten als Eingangsdaten entgegenzunehmen und Testverfahren, umfassend Testwerkzeuge und/oder Testfälle und/oder deren Parametrierung als Ausgabedaten auszugeben.

Bei dem Verfahren gemäß der Erfindung ist das Testverfahren vorzugsweise mit mindestens einem Testwerkzeug und/oder mindestens einem Testfall gebildet. Insbesondere Testwerkzeuge in Kombination mit Testfällen stellen fokussierte Teststrategien dar, die trennscharfe Testresultate hervorbringen. Gerade solche trennscharfen Testresultate enthalten regelmäßig Hinweise auf spezifische Geräteeigenschaften des Geräts. Solche spezifischen Geräteeigenschaften erlauben eine Fortsetzung des erfindungsgemäßen Verfahrens mit für das jeweilige Gerät maßgeschneiderten Tests. Optional und ebenfalls vorteilhaft umfasst das Testverfahren zusätzlich eine Parametrierung des Testfalls.

Bei dem erfindungsgemäßen Verfahren wird in einer bevorzugten Weiterbildung der Erfindung abhängig vom mindestens einen Testresultat, insbesondere dem mindestens einen Datum des mindestens einen Testresultats, und/oder dem ersten und/oder weiteren IT-Sicherheitstests mindestens ein Testverfahren von vorzugsweise mehreren Testverfahren, insbesondere mindestens ein Testwerkzeug und/oder mindestens ein Testfall, ausgenommen.

Geeigneterweise wird bei dem Verfahren gemäß der Erfindung abhängig vom ersten und/oder dem mindestens einen weiteren IT-Sicherheitstest die Zuordnungsvorschrift geändert.

Das erfindungsgemäße Computerprogrammprodukt ist zur Ausführung eines Verfahrens wie vorhergehend beschrieben ausgebildet und weist vorzugsweise die Zuordnungsdatenbank und/oder die Zuordnungsvorschrift auf.

Alternativ oder zusätzlich bildet und/oder erweitert die vom Computerprogrammprodukt hervorgebrachte relevante Information spezifischer Testresultate oder Protokolle, herangezogen zur Ausprägung weiterer Tests eines erfindungsgemäßen Verfahrens wie oben beschrieben, die Zuordnungsdatenbank und/oder die Zuordnungsvorschrift.

Die erfindungsgemäße Testeinrichtung zum Prüfen einer IT-Sicherheit eines Geräts umfasst mindestens ein Computerprogrammprodukt wie vorhergehend beschrieben.

Nachfolgend wird die Erfindung anhand eines in der Zeichnung dargestellten Ausführungsbeispiels näher erläutert.

Die einzige Zeichnungsfigur 1 zeigt ein Automatisierungsnetzwerk mit einer erfindungsgemäßen Testeinrichtung TUMG zur Ausführung eines erfindungsgemäßen Verfahrens zur Prüfung einer IT-Sicherheit eines Geräts des Automatisierungsnetzwerks.

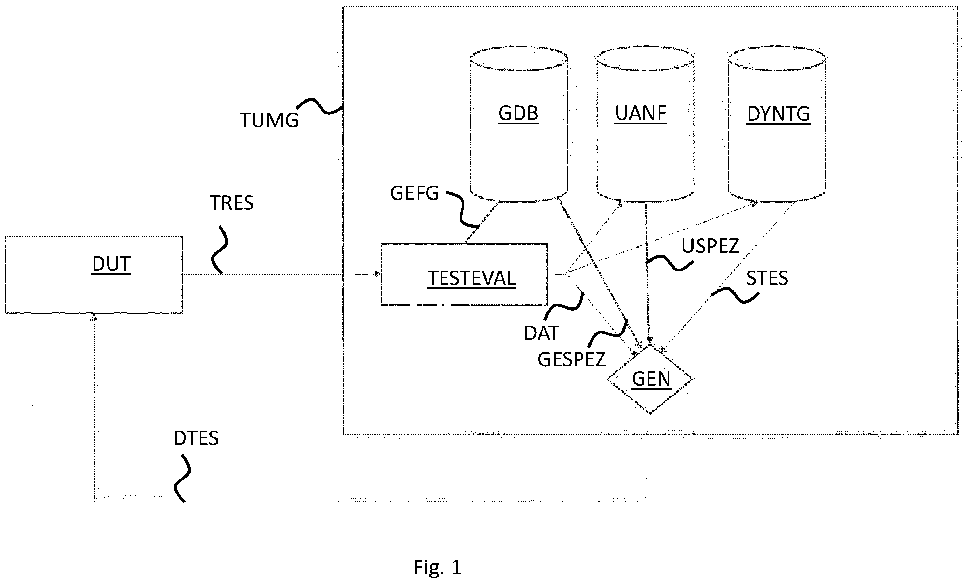

Das in Fig. 1 dargestellte erfindungsgemäße Verfahren dient der computer-implementierten, automatischen Prüfung einer IT-Sicherheit von Geräten DUT eines Automatisierungsnetzwerks. Beispielsweise können diese Geräte DUT Fertigungsgeräte und/oder Steuergeräte und/oder IIoT-Geräte (IIoT = engl. "Industrial Internet of Things") des Automatisierungsnetzwerks sein und Aktoren oder Sensoren des Automatisierungsnetzwerks umfassen. Beispielsweise sind die Geräte DUT Feldgeräte des Automatisierungsnetzwerks.

Das erfindungsgemäße Verfahren basiert auf einer automatisierten und intelligenten Auswahl GEN von Teststrategien und daraufhin durchgeführter Tests des Geräts DUT und umfasst eine iterative Durchführung DTES von Tests und eine jeweils nachfolgende intelligente automatische Auswahl GEN von neuen Tests aufgrund von aus bisherigen Tests, nämlich Testresultaten TRES bisheriger Tests, abgeleiteten Geräteeigenschaften GESPEZ. Die neuen Tests umfassen Testverfahren, welche aus abgeleiteten Geräteeigenschaften GESPEZ sowie aus Umgebungsanforderungen USPEZ abgeleitet worden sind. Diese Testverfahren sind auf Tests dieser Geräteeigenschaften GESPEZ und Umgebungsanforderungen USPEZ gerichtet. Dazu werden diesen Geräteeigenschaften GESPEZ und Umgebungsanforderungen USPEZ geeignete Testfälle und Testtools mittels einer Auswahl GEN zugeordnet. Diese mittels der automatischen Auswahl GEN ausgewählten neuen Testverfahren, umfassend Testfälle und Testwerkzeuge, werden nachfolgend durchgeführt. Soweit in der vorliegenden Beschreibung von Tests, Teststrategien und Testfällen gesprochen wird, sind jeweils Tests einer IT-Sicherheit und Teststrategien und Testfälle zum Test der IT-Sicherheit des Geräts DUT gemeint.

Zunächst erfolgt bei dem Verfahren eine Auswahl initialer Testfälle. Diese Auswahl initialer Testfälle erfolgt über eine Festlegung von gerätespezifischen Kriterien, die in einer ersten Iteration aus einer Geräte-Datenbank GDB erfolgt. In dieser Geräte-Datenbank GDB sind bereits bekannte Protokolle des Gerätes DUT sowie verfügbare Schnittstellen des Geräts DUT hinterlegt.

Sind die Geräte DUT hingegen initial noch nicht bekannt, so wird zunächst eine Anzahl von Standard-Tests STES und Inventory-Algorithmen verwendet, um genauere Informationen zu den Geräten DUT zu ermitteln. Die Standard-Tests und Inventory-Algorithmen werden von einem Testgenerierungsmodul DYNTG bereitgestellt, welches eine Vielzahl von Standard-Tests STES und Inventory-Algorithmen für diesen Zweck bereithält. Für den Betrieb des Geräts DUT im Automatisierungsnetzwerk relevante Umgebungsanforderungen USPEZ, beispielsweise ein erforderliches Internet-Facing oder ein notwendiger Zugang zu Webbasierten Diensten, werden ebenfalls initial festgelegt und durch generische Testfälle, hier aufgrund des OT-Umfelds von Automatisierungssystemen (OT = engl. "Operational Technology") durch industriespezifische Testfälle, ergänzt.

Infolge der verschiedenen Geräteeigenschaften GESPEZ und Umgebungsanforderungen USPEZ des Geräts DUT unternimmt die Testeinrichtung TUMG eine Auswahl GEN einer Teststrategie umfassend gerätespezifische Testtools sowie gerätespezifische Testfälle und deren optimale Parametrisierung basierend auf den ermittelten Daten von Testresultaten TRES der zuvor von der Testeinrichtung TUMG unternommenen Tests. So bildet beispielsweise das Vorliegen einer Firewall eine Geräteeigenschaft GESPEZ, welche impliziert, dass weniger intensiv getestet werden muss, was sich vorliegend in einer geringeren Intensivität von Fuzzing und Webtesting niederschlägt. Stattdessen werden durch die Testresultate TRES neu aufgefundene Geräteeigenschaften GESPEZ für nachfolgende Tests herangezogen, indem diese neu aufgefundenen Geräteeigenschaften GESPEZ nachfolgenden und mit der Auswahl GEN ausgewählten Tests unterzogen werden.

Dazu werden diese neu aufgefundenen Geräteeigenschaften GESPEZ der Gerätedatenbank GDB hinzugefügt. Analog dazu werden Umgebungsanforderungen USPEZ einer Umgebungsanforderungsdatenbank UANF hinzugefügt.

Die intelligente Auswahl GEN der Teststrategie, d. h. der Auswahl GEN der Tests mittels Testwerkzeugen und Testfällen und deren Parametrierung, erfolgt dabei unter der Berücksichtigung einzelner und/oder miteinander kombinierter Testresultaten TRES wie folgt:
Aus Daten DAT der bislang erhaltenen Testresultate TRES können neue, bisher nicht direkt aufgefundene Geräteeigenschaften GESPEZ geschlossen werden: So kann etwa aus dem Datum des Testresultats TRES, gemäß welchem das Gerät DUT für HTTPS-Verbindungen freigeschaltet ist, abgeleitet werden, dass das Gerät DUT die Geräteeigenschaft GESPEZ aufweist, Webkommunikation unternehmen zu können. Diese Geräteeigenschaft GESPEZ wird nun wiederum herangezogen, um einen Test einer IT-Sicherheit dieser Geräteeigenschaft GESPEZ einer Ausbildung des Geräts DUT für eine sichere Webkommunikation vorzusehen und folglich für die Geräteeigenschaft GESPEZ spezifische Testfälle vorzusehen, die die IT-Sicherheit vom Webkommunikation testen.

Die Zuordnung von Daten DAT der Testresultate TRES zu Geräteeigenschaften GESPEZ erfolgt ebenfalls über die Gerätedatenbank GDB, welche für diesen Zweck zusätzlich Zuordnungen umfasst, die Daten DAT der Testresultate TRES den Geräteeigenschaften GESPEZ in Form einer Zuordnungsmatrix zuordnet.

Analog dazu können aus gefundenen Geräteeigenschaften GESPEZ und/oder aus Daten DAT der Restresultate TRES neue Umgebungsanforderungen UANF des Geräts abgeleitet werden: So kann beispielsweise anhand von Daten DAT in Testresultaten TRES eine Verfügbarkeit des MODBUS-Protokolls auf dem Gerät DUT identifiziert werden und aus dieser Verfügbarkeit des MODBUS-Protokolls werden hinsichtlich der IT-Sicherheit relevante Umgebungsanforderungen USPEZ an die MODBUS-Kommunikation bestimmt, indem diese anhand der Daten DAT aus einer Umgebungsanforderungsdatenbank UANF geladen werden. In dieser Umgebungsanforderungsdatenbank UANF sind Zuordnungen von Daten DAT der Testresultate TRES, welche Umgebungsanforderungen USPEZ kennzeichnen, zu Umgebungsanforderungen USPEZ vorhanden, beispielsweise mittels einer Zuordnungsmatrix.

Bei dem erfindungsgemäßen Verfahren werden neue Testfälle detailliert und in den Testresultaten TRES gefundene TLS-Protokolle oder eine ermittelte Fuzzing-Tiefe für neue, weitere Testfälle verwendet. Dies kann iterativ wiederholt werden.

Die gefundenen Geräteeigenschaften GESPEZ können herangezogen werden, um eine Optimierung der Teststrategie, d. h. der Testverfahren, zu unternehmen. Dazu ist es möglich, aufgrund der Geräteeigenschaften GESPEZ bestimmte Test-Fälle oder "Äste" in einem verzweigten Testbaum nicht weiter zu verfolgen, da diese gerätespezifisch nicht notwendig oder sinnvoll sind. So können bestimmte Testfälle etwa über ein Whitelisting-Verfahren ausgenommen werden. Zum Beispiel kann aufgrund eines Fehlens sämtlicher für ein bestimmtes Kommunikationsmodul erforderlicher Protokolle, etwa eines Fehlens von Kommunikationsprotokollen, geschlossen werden, dass dieses bestimmte Kommunikationsmodul bei dem Gerät nicht vorhanden oder eingerichtet ist. Folglich kann ein Test der IT-Sicherheit dieses Kommunikationsmoduls bei dem Gerät DUT entfallen. Auf diese Weise kann bei dem Verfahren eine Ressourcen-Optimierung der Testeinrichtung TUMG, mittels welcher das Verfahren ausgeführt wird, unterstützt werden.

Neben der iterativen Optimierung der Teststrategie können in weiteren Ausführungsbeispielen noch folgende vorteilhafte Erweiterungen des Verfahrens vorgenommen werden:
Das zuvor beschriebene Verfahren wird beispielsweise zusätzlich zur Ermittlung eines Geräte-Risikos herangezogen und es wird mittels eines Scoring-Verfahrens mindestens ein Risiko-Indikator ermittelt.

Das oben beschriebene Verfahren wird zudem im dargestellten Ausführungsbeispiel zur adaptiven Testgenerierung verwendet: Auf Basis einer Kritikalität und einer gefundenen Geräteeigenschaft können dynamisch neue Testfälle oder Parametrierungen generiert werden, beispielsweise neue Inputfelder für XSS-Tests oder eine Intensivierung von Fuzzing-Tests, um die Test-Strategie geräte- und umgebungsspezifisch zu optimieren. Eine solche Generierung von neuen Testfällen und Parametrierungen wird ebenfalls mittels des Testgenerierungsmoduls DYNTG durchgeführt, welche etwa eine Intensität von Fuzzing-Tests oder eine Testtiefe der Fuzzing-Tests festlegt.

Das oben beschriebene Verfahren kann darüber hinaus zum differentiellen Testen im Vergleich zu bereits durchgeführten Tests verwendet werden: Zum einen können weitere Tests derart optimiert werden, dass bereits durchgeführte Tests nicht abermals mit identischer Parametrierung durchgeführt werden, sondern mit einer neuen, abweichenden Parametrierung vorgenommen werden.

Ferner können bereits in vorhergehenden Tests erhaltene Testresultate TRES herangezogen werden, um weitere Testfälle oder Testwerkzeuge einzusetzen, welche etwa bereits in der Vergangenheit in Kombination auftraten. Es werden folglich miteinander bislang häufig miteinander kombinierte Testfälle und/oder Testwerkzeuge auch künftig in Kombination miteinander eingesetzt.

Das oben beschriebene Verfahren kann zudem zum indikatorgetriebenen Testen aus Testresultaten TRES verwendet werden: So werden abhängig von Testresultaten TRES innerhalb einer Kategorie von Testwerkzeugen weitere Testwerkzeuge dieser Kategorie eingesetzt oder Testwerkzeuge dieser Kategorie weniger häufig herangezogen. Finden etwa mehr Testwerkzeuge einer bestimmten Kategorie von Testwerkzeugen Schwachstellen oder Fehlverhalten des Geräts, so werden auch künftig mehr Testwerkzeuge dieser Kategorie verwendet und umso genauer werden diese Testwerkzeuge parametriert. Insbesondere kann Kategorien von Testwerkzeugen ein Indikator, etwa abhängig von einer Anzahl von Testwerkzeugen, welche innerhalb dieser Kategorie Schwachstellen finden oder abhängig von einer Anzahl und/oder einer Kritikalität von Schwachstellen, die mit Testwerkzeugen dieser Kategorie gefunden werden, vergeben werden. Ein solcher Indikator gibt folglich eine Anfälligkeit gegen Angriffe innerhalb dieser Kategorie oder eine spezifische Code-Qualität einer Software des Geräts DUT innerhalb dieser Kategorie an. Abhängig von diesem Indikator können dann eine Anzahl von Testwerkzeugen dieser Kategorie und/oder ein Detaillierungsgrad einer Parametrierung von Testwerkzeugen und/oder eine Testtiefe in nachfolgenden Tests des Geräts DUT vorgesehen sein. Beispielsweise werden, wenn beim Fuzzing mit beispielsweise zwei Testwerkzeugen vergleichsweise viele Fehler gefunden werden, mehr verfügbare oder sämtliche verfügbaren Testwerkzeuge für das Fuzzing mit erhöhter oder voller Testtiefe eingesetzt.

Das oben beschriebene Verfahren kann derart erweitert werden, dass nach Durchführung aller verfügbaren Tests Hinweise gegeben werden, welche Testarten/-tools/-verfahren etc., die aktuell noch nicht durch die Testeinrichtung TUMG eingesetzt werden, verfügbar sind und in nachfolgenden Tests eingesetzt werden könnten.

Das Gerät DUT wird derart betrieben, dass das Gerät DUT mittels des zuvor beschriebenen Verfahrens zum Prüfen einer IT-Sicherheit eines Geräts DUT geprüft wird. Ergibt das Verfahren, dass das Gerät die IT-Sicherheit nicht erfüllt, so wird der Betrieb des Geräts DUT beendet oder es wird eine die IT-Sicherheit des Geräts DUT erhöhende Maßnahme ergriffen, insbesondere eine Aktualisierung einer Software des Geräts und/oder eine Beendigung des Betriebs des Geräts oder ein Versetzen des Geräts DUT in einen abgesicherten Betriebsmodus.

Bei dem Verfahren werden die ermittelten weiteren Testfälle und/oder Testwerkzeuge in einem weiteren Ausführungsbeispiel zum Test des Geräts DUT eingesetzt.

Das oben dargestellte erfindungsgemäße Verfahren wird mittels einer der erfindungsgemäßen Testeinrichtung TUMG durchgeführt, welche als Computer mit einem entsprechenden Computerprogrammprodukt eingerichtet ist. Der Computer führt das erfindungsgemäße Verfahren mittels des Computerprogrammprodukts aus.

## Patentansprüche

1. Verfahren zum Prüfen einer IT-Sicherheit eines Geräts (DUT), bei welchem das Gerät (DUT) zunächst mindestens einem ersten IT-Sicherheitstest (STES) unterzogen wird und bei welchem mindestens ein Datum mindestens eines Testresultats (TRES) des mindestens einen ersten IT-Sicherheitstests (STES) herangezogen wird, wobei das Datum eine weitere bislang unberücksichtigte Geräteeigenschaft kennzeichnet, und bei welchem eine Zuordnungsvorschrift herangezogen wird, die dem mindestens einen Datum (DAT) ein Testverfahren für mindestens einen weiteren IT-Sicherheitstest des Geräts (DUT) zuordnet, welcher nachfolgend die mindestens eine weitere Geräteeigenschaft (GSPEZ, USPEZ) des Geräts (DUT) einem Test unterzieht (DTES).

2. Verfahren nach dem vorhergehenden Anspruch, bei welchem das mindestens eine Datum (DAT) mindestens eine Protokollinformation, kennzeichnend eine Befähigung des Geräts zu einem Protokoll, ist oder umfasst.

3. Verfahren nach einem der vorhergehenden Ansprüche, bei welchem die mindestens eine Geräteeigenschaft mindestens eine Befähigung des Geräts (DUT) zur Datenverarbeitung mittels des Protokolls umfasst.

4. Verfahren nach einem der vorhergehenden Ansprüche, bei welchem das mindestens eine Protokoll ein Kommunikationsprotokoll ist.

5. Verfahren nach einem der vorhergehenden Ansprüche, bei welchem die Befähigung des Geräts (DUT) zur Datenverarbeitung eine Befähigung des Geräts (DUT) zur Kommunikation ist oder umfasst.

6. Verfahren nach einem der vorhergehenden Ansprüche, bei welchem die mindestens eine Geräteeigenschaft eine Ausbildung des Geräts (DUT) zur Erfüllung einer Umgebungsanforderung ist.

7. Verfahren nach einem der vorhergehenden Ansprüche, bei welchem das Verfahren wiederholt wird, wobei der mindestens eine weitere IT-Sicherheitstest an die Stelle des mindestens einen ersten IT-Sicherheitstests (STES) tritt.

8. Verfahren nach einem der vorhergehenden Ansprüche, bei welchem ein Scoring abhängig von einer Häufigkeit und/oder einer Kritikalität von Testresultaten (TRES) der IT-Sicherheitstests der jeweiligen Geräteeigenschaft (GESPEZ, USPEZ) durchgeführt wird.

9. Verfahren nach einem der vorhergehenden Ansprüche, bei welchem die Zuordnungsvorschrift (GDB) mittels einer Zuordnungsdatenbank gebildet ist, bei welcher einer Mehrzahl von Daten jeweils ein oder mehrere Testverfahren zugeordnet sind.

10. Verfahren nach einem der vorhergehenden Ansprüche, bei welchem die Zuordnungsvorschrift (GDB) mittels eines neuralen Netzes gebildet ist.

11. Verfahren nach einem der vorhergehenden Ansprüche, bei welchem das Testverfahren mit mindestens einem Testwerkzeug und/oder mindestens einem Testfall gebildet ist.

12. Verfahren nach einem der vorhergehenden Ansprüche, bei welchem abhängig vom mindestens einen Testresultat, insbesondere dem mindestens einen Datum des mindestens einen Testresultats, und/oder dem ersten und/oder dem mindestens einen weiteren IT-Sicherheitstest (STES, DTES) ein Testverfahren, insbesondere mindestens ein Testwerkzeug und/oder mindestens ein Testfall, ausgenommen wird.

13. Verfahren nach einem der vorhergehenden Ansprüche, bei welchem abhängig vom ersten und/oder dem mindestens einen weiteren IT-Sicherheitstest (STES, DTES) die Zuordungsvorschrift (GDB) geändert wird.

14. Computerprogrammprodukt, ausgebildet zur Ausführung eines Verfahrens nach einem der vorhergehenden Ansprüche, welche die Zuordnungsdatenbank und/oder die Zuordnungsvorschrift (GDB) aufweist.

15. Testeinrichtung zum Prüfen einer IT-Sicherheit eines Geräts (DUT), umfassend mindestens ein Computerprogrammprodukt nach dem vorhergehenden Anspruch.
